Europäisches Patentamt

European Patent Office

Office européen des brevets

(19)

(11) Veröffentlichungsnummer : **0 362 261 B1**

# EUROPÄISCHE PATENTSCHRIFT

(12)

(45) Veröffentlichungstag der Patentschrift :
**22.05.91 Patentblatt 91/21**

(51) Int. Cl.⁵ : **F02F 3/00, F02F 3/22**

(21) Anmeldenummer : **88904955.7**

(22) Anmeldetag : **21.05.88**

(86) Internationale Anmeldenummer :
**PCT/EP88/00455**

(87) Internationale Veröffentlichungsnummer :
**WO 88/09433 01.12.88 Gazette 88/26**

(54) **KÜHLBARER TAUCHKOLBEN FÜR VERBRENNUNGSMOTOREN.**

(30) Priorität : **26.05.87 DE 3717767**

(43) Veröffentlichungstag der Anmeldung :
**11.04.90 Patentblatt 90/15**

(45) Bekanntmachung des Hinweises auf die
Patenterteilung :
**22.05.91 Patentblatt 91/21**

(84) Benannte Vertragsstaaten :
**DE FR GB IT SE**

(56) Entgegenhaltungen :
**DE-A- 3 210 771
DE-U- 7 627 154
GB-A- 2 148 451
US-A- 4 377 967**

(73) Patentinhaber : **MAHLE GMBH
Pragstrasse 26-46
W-7000 Stuttgart 50 (DE)**

(72) Erfinder : **STEPPAT, Eduard
Bachstr. 42
W-7312 Kirchheim/Teck (DE)**
Erfinder : **LETSCH, Thomas
Berkener Weg 20
W-7067 Plüderhausen (DE)**

(74) Vertreter : **Pfusch, Volker, Dipl.-Ing.
MAHLE GMBH Patentabteilung Pragstrasse
26-46 Postfach 50 07 69
W-7000 Stuttgart 50 (DE)**

**Beschreibung**

Die Erfindung betrifft einen kühlbaren Tauchkolben für Verbrennungsmotoren nach dem Oberbegriff des Patentanspruchs 1.

Derartige Kolben sind z.B. aus US-PS 41 80 027 bekannt. Jener bekannte Kolben wird im Bereich des Kolbenbodens sowohl in dem äußeren Ringraum als auch im radial zentralen Innenbereich gekühlt. Das Kühlöl wird aus dem Kurbelraum in den äußeren Ringraum im Kolbenoberteil gespritzt. Durch an dem oberen Ende des Kolbenschaftes vorgesehene Flüssigkeitsfangtaschen kann das Kühlöl in den Bereich innerhalb der inneren Ringwandabstützung eindringen.

Einen ähnlichen Kolben zeigt GB-A 21 48 451. Das für den Bereich innerhalb der inneren Ringwandabstützung bestimmte Kühlöl kann auch dort nur über einen äußeren geschlossenen Kühlkanal eingebracht werden. Das in dem äußeren Kühlkanal geshakerte Kühlöl gelangt jeweils durch die während der oszillierenden Bewegung des Kolbens auf das in dem Kühlkanal befindliche Kühlöl einwirkenden Massenträgheitskräfte durch wenigstens eine radiale Öffnung in der inneren Ringwandabstützung an das Kolbenbodenzentrum. Ein direktes Anspritzen vom Kurbelraum aus ist hierbei nicht möglich, so daß immer nur bereits vorgewärmtes Kühlöl das Zentrum des Kolbenbodens erreichen kann.

Hier eine durch Direkteinspritzung aus dem Kurbelraum wirksamere und konstruktiv einfachere Möglichkeit zum Einbringen des Kühlöles in den zentralen Innenbereich des Kolbens zu schaffen, ist Aufgabe der vorliegenden Erfindung. Gelöst wird sie durch eine Ausbildung des Kolbens nach den kennzeichnenden Merkmalen des Patentanspruchs 1.

Zweckmäßige Ausgestaltungen der Erfindung sind Gegenstand der Unteransprüche.

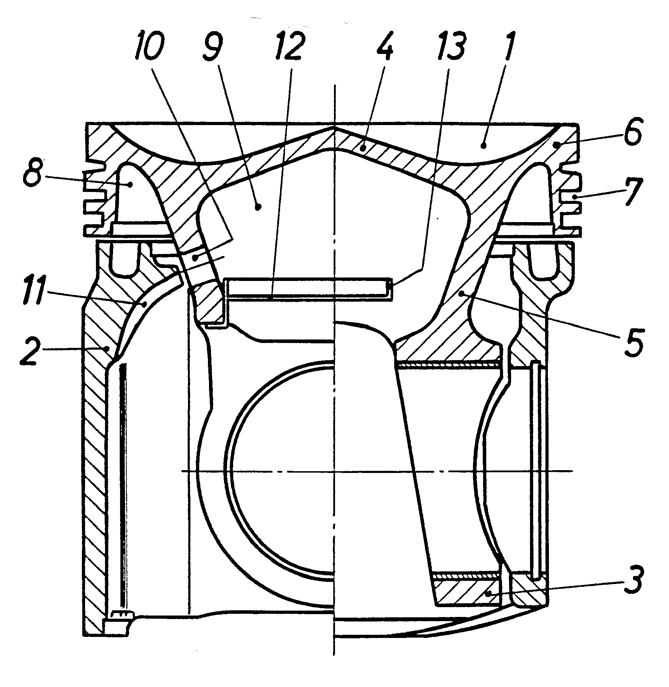

Ein Ausführungsbeispiel ist in der Zeichnung dargestellt, die einen Kolben in zwei zueinander um 90 Grad versetzten Halbschnitten zeigt.

Der Kolben besteht aus einem Kolbenoberteil 1 und einem Schaft 2, wobei diese Teile lediglich über einen nicht dargestellten Kolbenbolzen miteinander verbunden sind. Der nicht dargestellte Kolbenbolzen lagert bei dem Kolbenoberteil 1 in Bohrungen der Naben 3. Mit dem Kolbenboden 4 des Kolbenoberteiles sind die Naben 3 über eine innere Ringwandabstützung 5 verbunden. Radial außen geht der Kolbenboden 4 in einen äußeren Ringwandabschnitt 6 über, der die Ringnuten 7 aufnimmt.

Von dem Kurbelraum wird in nicht dargestellter Weise Kühlöl in den äußeren Ringraum 8 eingespritzt. Um Kühlöl auch in den Innenraum 9 innerhalb der Ringwandabstützung 5 führen zu können, ist in der Ringwandabstützung eine radiale Öffnung 10 vorgesehen. Von der Innenoberfläche des Kolbenschaftes 2 aus ist ein zur Kolbenachse hin offener Kanalabschnitt 11 angeformt. Die Strömungsrichtung in diesem Kanal liegt in einer durch die Kolbenachse aufgespannten Radialebene und zwar derart gekrümmt, daß das zum Kolbenkopf weisende Ende des Kanalabschnittes direkt in die Öffnung 10 mündet. Die Krümmung des Strömungskanales in dem Kanalabschnitt 11 ist dabei so gewählt, daß das aus dem Kurbelraum durch eine Düse in Form eines Ölstrahles eingespritzte Öl etwa tangential in den Kanalabschnitt 11 einmündet. Der Kanalquerschnitt ist im übrigen größenmäßig so gewählt, daß er etwas kleiner ist als der Öffnungsquerschnitt der radialen Öffnung 10. Auf diese Weise ist ein vollständiges Überführen des Kühlöles aus dem Kanal in die Öffnung 10 gewährleistet.

Um ein Shakern des in den Innenraum 9 eingeführten Kühlöles zu ermöglichen, ist der Innenraum 9 an seinem nach unten offenen Ende durch eine z.B. durch Schrauben oder Verschweißen eingebrachte Abdeckung 12 verschlossen. Bei dem Verschließen ist allerdings darauf geachtet, daß Öffnungen bzw. Freiräume zum Abfluß des Kühlöles verbleiben.

Stellt die Abdeckung 12 nur ein die untere Öffnung des Innenraumes 9 teilweise erfassendes brückenartiges Gebilde dar, können die nicht direkt an die Ringwandabstützung angrenzenden Ränder als Kragen 13 ausgebildet sein.

**Ansprüche**

1. Kühlbarer Tauchkolben für Verbrennungsmotoren bestehend aus einem Oberteil (1) mit einem radial außen in einen die Kolbenringnuten (7) aufnehmenden Ringwandabschnitt (6) übergehenden Kolbenboden (4), an den über eine mit Abstand innerhalb des äußeren Ringwandabschnittes (6) verlaufende innere Ringwandabstützung (5) die den Kolbenbolzen aufnehmenden Naben (3) angeformt sind und einem nur über den Kolbenbolzen mit dem Oberteil (1) verbundenen Kolbenschaft (2), bei dem der Kolbenboden (4) zumindest in dem innerhalb der inneren Ringwandabstützung (5) liegenden Bereich durch vom Kurbelraum in den Kolben eingespritztes Öl kühlbar ist,

**gekennzeichnet** durch die Merkmale :
a) in der inneren Ringwandabstützung (5) ist mindestens eine direkt in den zum Kolbenschaftende hin offenen Kolbenschaftinnenraum weisende radiale Öffnung (10) vorgesehen,
b) an der inneren Oberfläche des Kolbenschaftes (2) ist ein in Richtung der Kolbenachse offener in Kolbenlängsrichtung gekrümmt auf die Kolbenachse zu verlaufender Kanalabschnitt (11) vorgesehen,
c) das zum Kolbenboden weisende Ende des Kanalabschnittes (11) mündet in die mindestens eine radiale Öffnung (10) der Ringwandabstützung (5),

d) der Kanalabschnitt (11) verläuft in einer durch die Kolbenachse aufgespannten Radialebene derart gekrümmt, daß das als Strahl eingespritzte Kühlöl nach etwa tangentialem Einlauf in das an der Kolbenschaftinnenoberfläche beginnende eine Ende des Kanalabschnittes (11) etwa senkrecht auf die radiale Öffnung (10) der Ringwandabstützung (5) auftrifft.

2. Kühlbarer Tauchkolben nach Anspruch 1, dadurch **gekennzeichnet,** daß der Kanalquerschnitt des Kanalabschnittes (11) kleiner als der Querschnitt der radialen Öffnung (10) ist.

3. Tauchkolben nach Anspruch 1 oder 2, dadurch **gekennzeichnet,** daß das untere offene Ende des Innenraumes (9) innerhalb der Ringwandabstützung (5) durch eine fest mit der Ringwandabstützung (5) verbindbare Abdeckung (12) bis auf eine den Abfluß des Kühlöles ermöglichende Abflußöffnung verschließbar ist.

## Claims

1. A coolable plunger piston for internal combustion engines consisting of an upper part (1) with a piston head (4) which merges radially outwardly into an annular wall portion (6) which receives the piston ring grooves (7) and on which there are integrally moulded the bosses (3) which accommodate the gudgeon pins over an inner annular wall support (5) which extends at a distance from and within the outer annular wall portion (6) and with a piston skirt (2) which is connected to the upper part (1) solely via the gudgeon pin and wherein at least in the area disposed within the inner annular wall support (5), the piston head (4) can be cooled by oil injected into the piston from the crank chamber, characterised by the features :

    a) in the inner annular wall support (5) there is at least one radial aperture (10) pointing directly into the piston skirt interior which is open towards the piston skirt end,

    b) on the inner surface of the piston skirt (2) there is, open in the direction of the piston axis and curved in the longitudinal direction of the piston, a passage portion (11) which extends to the piston axis,

    c) the end of the passage portion (11) which isdirected at the piston head opens out into the at least one radial aperture (10) in the annular wall support (5),

    d) the passage portion (11) extends in a radial plane through the piston axis in a curved manner so that the cooling oil which is injected as a stream, after a substantially tangential entry into the end of the passage portion (11) which starts at the inner surface of the piston skirt strikes the radial aperture (10) of the annular wall support (5) in a substantially perpendicular direction.

2. A coolable plunger piston according to claim 1, characterised in that the passage cross-section of the passage portion (11) is smaller than the cross-section of the radial aperture (10).

3. A plunger piston according to claim 1 or 2, characterised in that the open bottom end of the interior (9) within the annular wall support (5) can be occluded by a covering (12) which can be rigidly connected to the annular wall support (5), except for a discharge orifice which permits the cooling oil to flow out.

## Revendications

1. Piston fourreau refroidissable pour moteurs thermiques, constitué par une partie supérieure (1) avec un fond de piston (4) se transformant radialement vers l'extérieur en une partie de paroi annulaire (6) présentant les gorges (7) pour segments de piston, auquel fond de piston sont rapportés, par l'intermédiaire d'une structure intérieure (5) servant d'appui à la paroi annulaire et s'étendant à une certaine distance à l'intérieur de la partie extérieure (6) de la paroi annulaire, les bossages (3) recevant l'axe de piston, et par une jupe de piston (2) reliée exclusivement par l'intermédiaire de l'axe de piston à la partie supérieure (1), le fond de piston (4) pouvant, au moins dans la région située à l'intérieur de la structure d'appui intérieure (5) pour la paroi annulaire, être refroidi par de l'huile injectée à partir du carter de vilebrequin dans le piston, caractérisé en ce que :

    a) dans la structure d'appui intérieure (5) pour la paroi annulaire est prévue au moins une ouverture radiale (10) orientée directement vers l'espace intérieur de la jupe de piston, ouvert en direction de l'extrémité de la jupe de piston ;

    b) sur la surface intérieure de la jupe de piston (2) est prévu un tronçon de canal (11) ouvert en direction de l'axe fictif du piston et s'étendant dans la direction longitudinale du piston, de façon incurvée, vers l'axe fictif de ce dernier ;

    c) l'extrémité du tronçon de canal (11) orientée vers le fond de piston débouche dans au moins une ouverture radiale (10) de la structure d'appui (5) de la paroi annulaire ; et

    d) le tronçon de canal (11) s'étend, dans un plan radial passant par l'axe fictif du piston, d'une manière incurvée telle que l'huile de refroidissement injectée sous forme de jet, après son entrée sensiblement tangentielle dans l'extrémité du tronçon de canal (11) débutant sur la surface intérieure de la jupe de piston, rencontre à peu près perpendiculairement l'ouverture radiale (10) de la structure d'appui (5) de la paroi annulaire.

2. Piston fourreau refroidissable selon la revendication 1, caractérisé en ce que la section du tronçon de canal (11) est inférieure à la section de l'ouverture radiale (10).

3. Piston fourreau selon la revendication 1 ou 2, caractérisé en ce que l'extrémité inférieure ouverte de l'espace intérieur (9), situé à l'intérieur de la structure d'appui (5) de la paroi annulaire, peut être fermé, par un recouvrement (12) pouvant être relié de manière fixe à la structure d'appui (5) de la paroi annulaire, exception faite d'une ouverture d'écoulement permettant l'évacuation de l'huile de refroidissement.